# EUROPÄISCHE PATENTANMELDUNG

(11) **EP 2 193 913 A2**
(43) Veröffentlichungstag der Anmeldung: **09.06.2010**
(21) Anmeldenummer: 09012061.9
(22) Anmeldetag: 23.09.2009
(51) Int. Cl.: B30B 11/22, C10L 5/44

(54) **Vorrichtung zum Herstellen von Formlingen aus einem formbaren Material, insbesondere Biomassen**

(30) Priorität: 04.12.2008 DE 202008016119 U
(71) Anmelder: Jordan, Joachim, 31606 Warmsen (DE)
(72) Erfinder: Jordan, Joachim, 31606 Warmsen (DE)
(74) Vertreter: Jabbusch, Matthias

(57) **Zusammenfassung**

Bei einer Vorrichtung zum Herstellen von Formlingen aus einem formbaren Material, insbesondere aus Biomassen, umfassend wenigstens eine Einrichtung (4) zum Zerkleinern des Materials, ist vorgesehen, dass sie weiterhin wenigstens eine Einrichtung (8) zum Formlingformen aufweist.
Mit dieser Vorrichtung können in kompakter Bauform aus verschiedenen Ausgangsstoffen Formlinge hergestellt werden.

## Beschreibung

Die Erfindung betrifft eine Vorrichtung zum Herstellen von Formlingen aus einem formbaren Material, insbesondere aus Biomassen, umfassend wenigstens eine Einrichtung zum Zerkleinern des Materials.

Formlinge, z.B. aus Holz oder aus anderer Biomasse, insbesondere Pellets oder Briketts, werden im zunehmenden Maße zum Heizen von Räumen, zum Erwärmen von Frisch- und Heizungswasser sowie in Anlagen der Kraft-Wärme-Kopplung zum Erzeugen von Strom und Wärme eingesetzt. Die Formlinge können z.B. aus Holzausgangsstoffen, wie Sägespänen, Ästen, Bauholz und Ähnlichem hergestellt sein, gattungsgemäße Vorrichtungen weisen daher jeweils eine Einrichtung zum Zerkleinern der Ausgangsstoffe auf.

Wenn aus den zerkleinerten Ausgangsstoffen die Formlinge hergestellt werden sollen, so sind im Stand der Technik weitere Vorrichtungen erforderlich. Diese Vorrichtungen sind separate Maschinen mit eigenen Antrieben, so dass der Werkzeugpark zu Herstellung von Formlingen umfangreich ist.

Der Erfindung liegt die Aufgabe zugrunde, eine Vorrichtung der eingangs genannten Gattung aufzuzeigen, mit der in kompakter Bauform aus verschiedenen Ausgangsstoffen Formlinge hergestellt werden können.

Diese Aufgabe ist erfindungsgemäß dadurch gelöst, dass die Vorrichtung weiterhin wenigstens eine Einrichtung zum Formlingformen aufweist.

Bei der erfindungsgemäßen Vorrichtung wird neben dem Zerkleinern der Ausgangsstoffe zugleich ein Formen der Formlinge vorgenommen, beispielsweise der Pellets. Die Vorrichtung weist dazu vorzugsweise für beide Einrichtungen einen gemeinsamen Antrieb auf, so dass sie kompakt ausbildbar ist. Statt verschiedener Vorrichtungen für das Zerkleinern und Formen wird mit der erfindungsgemäßen Vorrichtung eine Zusammenfassung beider Bearbeitungsschritte z.B. in einem Gehäuse und vorzugsweise mit einem Antrieb vorgenommen.

Vorzugsweise weist der Antrieb zumindest einen Elektromotor auf. Ein Elektromotor kann das erforderliche Drehmoment aufbringen, um die beiden Einrichtungen anzutreiben. Darüber hinaus ist elektrische Energie zum Betrieb eines Elektromotors überall verfügbar. Der Antrieb ist darüber hinaus vorzugsweise mit wenigstens einem Getriebe ausgerüstet, um einen konstanten Antrieb durch den Elektromotor in voneinander verschiedene Bewegungen von Bauteilen der Einrichtung umzusetzen. Alternativ kann der Antrieb auch einen Anschluss an die Zapfwelle eines Zugfahrzeuges aufweisen.

Der Transport der Antriebsenergie vom Antrieb bzw. vom Getriebe zu den Einrichtungen erfolgt vorzugsweise mit einer Welle, die mit Werkzeugen der Einrichtungen zum Zerkleinern und Formlingformen in Wirkverbindung steht. Die Welle kann sich durch die verschiedenen Einrichtungen hindurchziehen, bei Bedarf kann die eine oder andere Einrichtung an die Welle angeschlossen werden.

Zusätzliche Transporte von der Zerkleinerungseinrichtung zur Formlingformeinrichtung sind vorteilhaft nicht erforderlich. Das damit verbundene Zwischenlagern, Verladen und wiederholte Materialaufgeben kann unterbleiben. Auch zusätzliches Sieben, Filtern, Trocknen, Befeuchten oder andere Formen der Aufbereitung und Konditionierung entfallen vorteilhaft. Alle erforderlichen Prozesse sind in ein und derselben Vorrichtung integriert.

Zur konstruktiven Ausbildung der Einrichtung zum Zerkleinern der Ausgangsstoffe ist nach einer Weiterbildung der Erfindung vorgesehen, dass diese Einrichtung zumindest eine umlaufende Raspeltrommel aufweist. In die Raspeltrommel als Mahlwerk können die verschiedenen Ausgangsstoffe, wie Stammware, Astabschnitte, Baumkronen, Zweige inklusive Laub, Resthölzer aufgegeben werden. Stroh, Gräser oder andere Biomassefasern können hinzugegeben werden. Das aufgegebene Material wird von der Raspeltrommel abgearbeitet, die Raspeltrommel hat dabei vorzugsweise eine niedrige Drehzahl von etwa 50 Umdrehungen pro Minute. Durch die geringe Geschwindigkeit werden Staub- und Geräuschemissionen verhindert, eine Gefahr durch schnell drehende Werkzeuge oder herausschleudernde Teile ist nicht gegeben.

Die Raspeltrommel weist vorzugsweise innen- und/oder außen liegende Raspelzähne auf, mit der auch festes Ausgangsmaterial zerkleinert werden kann.

Nach einer nächsten Weiterbildung der Erfindung ist vorgesehen, dass der Boden der Raspeltrommel als Sieb ausgebildet ist. Durch eine geeignete Anordnung der Raspeltrommel können zerkleinerte Partikel gegen den Boden der Raspeltrommel rutschen und durch das Sieb der Raspeltrommel austreten. Vom Sieb noch aufgehaltene Partikel werden einer weiteren Zerkleinerung zugeführt, bis auch sie das Sieb passieren können. Durch den Siebboden erfolgt eine Festlegung der Partikelgrößen für das anschließende Formlingformen.

Als weitere Ausbildung der Erfindung ist vorgesehen, zwischen dem Übergang von der Zerkleinerungseinheit zur abschließenden Vorrichtung zum Formlingformen eine Einrichtung zum Konditionieren und Dosieren des Materialstromes anzuordnen. In dieser Einheit befinden sich Einlässe zum Modifizieren der Feuchtigkeit des zerkleinerten Materialstromes und zum Unterbrechen der Weiterleitung des Materialstromes in die nachgeschaltete Vorrichtung zum Formlingformen.

Erfindungsgemäß ist vorgesehen, diese Einrichtung so auszubilden, dass der zerkleinerte Materialstrom hier bei Bedarf auch aus der Vorrichtung ausgeschieden werden kann. Dieses Aussteuern von beispielsweise für die Formlingformung ungeeignetem Material soll mittels einer Schiebemechanik erfolgen können. Zudem kann diese Vorrichtung zur Gewinnung von Materialproben dienen, ohne die Maschine öffnen zu müssen.

Die Einheit zum Dosieren des Materialstromes kann weiterhin eine mitlaufende Fördereinrichtung enthalten, beispielsweise bestehend aus einer Förderschnecke oder einem Flügel.

Erfindungsgemäß ist vorzugsweise zusätzlich vorgesehen, die im Bedarfsfall benötigten Vorgänge zur Modifizierung der Feuchtigkeit und der Temperatur des Materialstromes aus dem Antrieb und aus der Einheit zum Formlingformen zu gewinnen. Diese Rückführung des Luftstromes der Antriebskühlung sowie der Prozessabwärme und Prozessfeuchtigkeit in die Konditionierung bewirkt eine Unabhängigkeit von externen Zugaben und erhöht insbesondere den energetischen Wirkungsgrad der gesamten Vorrichtung.

Die Einrichtung zum Formlingformen kann beispielsweise als Presse ausgebildet sein. Nach dem Pressvorgang werden die gewünschten Presskörper ausgeschieden. Diese Presskörper können Pellets oder Briketts sein, die Einrichtung zum Formlingformen ist dazu wechselweise mit Werkzeugen zum Formen von Pellets oder Briketts ausrüstbar.

Zur weiteren Ausbildung der Erfindung ist noch vorgesehen, dass die Einrichtung zum Zerkleinern, die Einrichtung zum Formlingformen sowie die integrierte Einrichtung zur Konditionierung und zur Dosierung in einem gemeinsamen Gehäuse aneinander anschließend angeordnet sind, wobei das Gehäuse in einer schrägen oder in einer vertikalen Lage auf einem Chassis aufgenommen ist. Durch das Gehäuse sind die Einrichtungen zusammengefaßt. Die schräge Anordnung des Gehäuses ermöglicht eine Schrägstellung der Einrichtung zum Zerkleinern, so dass zerkleinerte Partikel gegen den als Sieb ausgebildeten Boden geführt werden. Dies ist auch bei einer vertikalen Anordnung gegeben. Das Chassis nimmt das Gehäuse auf und hält es in seiner Ausrichtung. Der Antrieb kann dabei außerhalb des Gehäuses angeordnet sein, während die Welle durch das Gehäuse zu den einzelnen Einrichtungen und ihren Werkzeugen geführt ist.

Das Chassis kann schließlich mit Laufrädern und einer Deichsel oder Griffen ausgerüstet sein, um es zu verschiedenen Einsatzorten zu bewegen. Weiterhin sind Adaptierungen für die Aufnahme an Träger- oder Zugfahrzeugen erfindungsgemäß vorgesehen. Dadurch ist eine Mobilität der erfindungsgemäßen Vorrichtung ausgebildet.

Ausführungsbeispiele der Erfindung, aus denen sich weitere erfinderische Merkmale ergeben, sind in der Zeichnung dargestellt. Es zeigen:
- Fig. 1:: eine schematische Seitenansicht eines ersten Ausführungsbeispiels der Vorrichtung zum Herstellen von Formlingen;
- Fig. 2:: eine Seitenansicht eines zweiten Ausführungsbeispiels der Vorrichtung zum Herstellen von Formlingen, und
- Fig. 3:: eine Seitenansicht eines dritten Ausführungsbeispiels der Vorrichtung zum Herstellen von Formlingen.

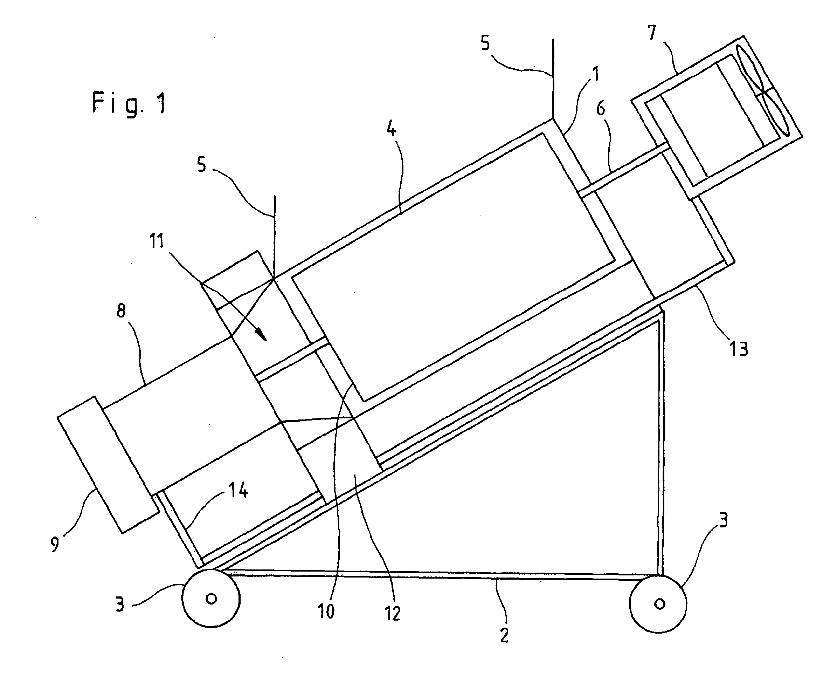

Die Vorrichtung in Fig. 1 weist ein Gehäuse 1 auf. Das Gehäuse 1 ist in einer schrägen Ausrichtung auf einem Chassis 2 angeordnet, das Laufräder 3 hat. Das Gehäuse 1 nimmt eine Raspeltrommel 4 als Einrichtung zum Zerkleinern von Biomasse auf. Im Bereich der Raspeltrommel 4 sind im Gehäuse 1 Öffnungsklappen 5 angeordnet.

Die Raspeltrommel 4 ist auf einer Welle 6 angeordnet. Die Welle 6 ist mit einem Elektromotor 7 verbunden, wobei der Elektromotor 7 außerhalb des Gehäuses 1 angeordnet ist.

Die Welle 6 setzt sich nach der Raspeltrommel 4 fort, sie verläuft noch in eine Einrichtung 8 zum Formen von Formlingen. Diese Einrichtung 8 ist beispielsweise als Presse ausgebildet, an einem dem Elektromotor 7 gegenüberliegenden Abschnitt des Gehäuses 1 ist der Austritt 9 aus der Einrichtung 8 angeordnet. Presskörper treten über den Austritt 9 aus dem Gehäuse 1 aus, die Presskörper können dabei als Pellets oder Briketts ausgebildet sein. Im Bereich des Austritts 9 sind wechselweise Werkzeuge für den einen oder anderen Formling anordbar.

Die Raspeltrommel 4 hat einen als Sieb ausgebildeten Boden 10. Dem Boden 10 folgt in Beförderungsrichtung der Ausgangsstoffe eine Konditioniereinrichtung 11.

In die Konditioniereinrichtung 11 mündet eine Lüftungsführung 12. In diese Lüftungsführung 12 wird Kühlluft des Elektromotors 7 über eine Luftleitung 13 geführt, weiterhin kann über eine Leitung 14 eine Rückführung von Luft, Wärme und Feuchtigkeit aus der Einrichtung 8 zum Formen von Formlingen erfolgen.

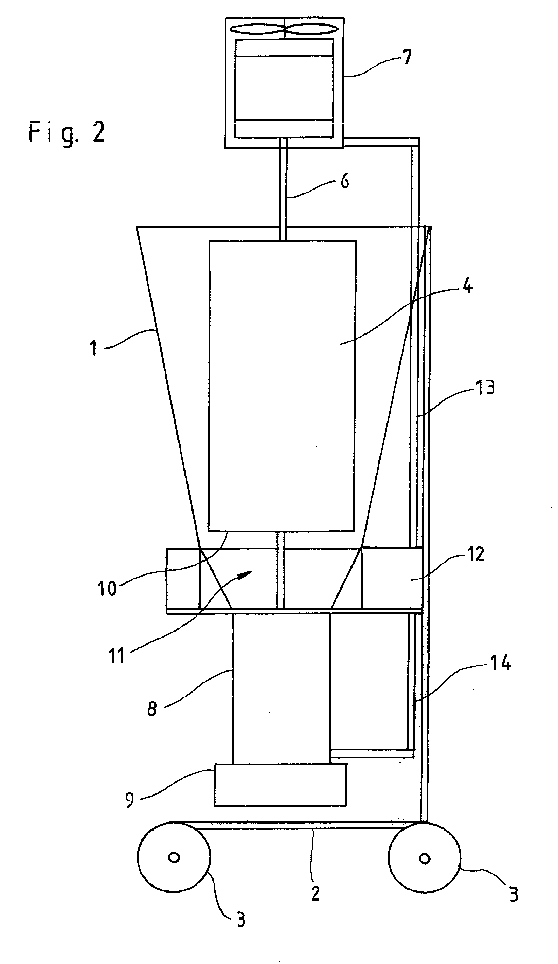

In Fig. 2 erfolgt eine vertikale Anordnung der erfindungsgemäßen Vorrichtung. Die Beschickung des Gehäuses 1 erfolgt hier von oben.

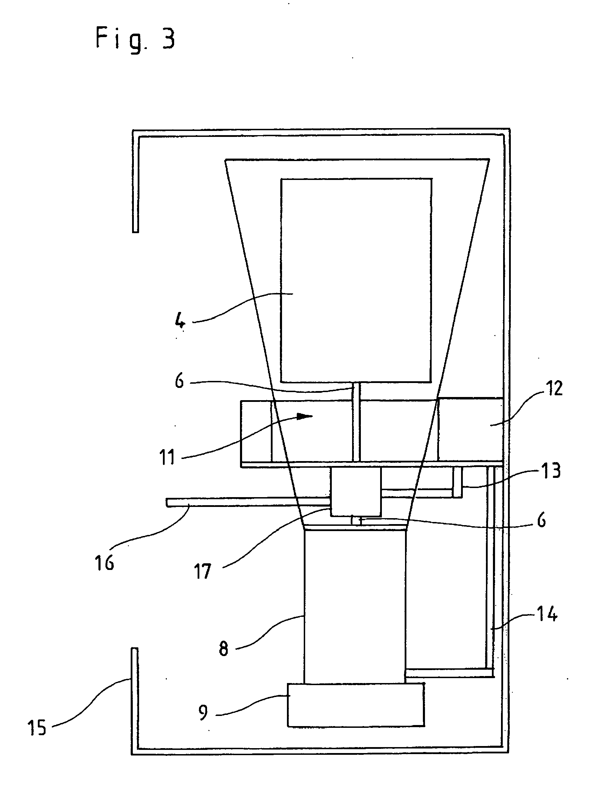

Bei dem Ausführungsbeispiel nach Fig. 3 ist die erfindungsgemäße Vorrichtung nicht in einem fahrbaren Chassis angeordnet. Hier erfolgt die Aufnahme der Vorrichtung in einem Maschinengestell 15, das gegebenenfalls an Trägerfahrzeuge adaptiert werden kann. Als Antrieb wird bei diesem Ausführungsbeispiel kein Elektromotor eingesetzt, vielmehr ist eine Welle 16 zum Anschluss an die Zapfwelle eines Zugfahrzeuges vorgesehen. Die Drehbewegung der Welle 16 wird über ein Getriebe 17 in Wellen 6 für die Raspeltrommel 4 und für die Einrichtung 8 zum Formlingformen übertragen.

## Patentansprüche

1. Vorrichtung zum Herstellen von Formlingen aus einem formbaren Material, insbesondere aus Biomassen, umfassend wenigstens eine Einrichtung zum Zerkleinern des Materials,
**dadurch gekennzeichnet,**
**dass** sie weiterhin wenigstens eine Einrichtung zum Formlingformen aufweist.

2. Vorrichtung nach Anspruch 1, **dadurch gekennzeichnet, dass** die Einrichtungen zum Zerkleinern und Formlingformen einen gemeinsamen Antrieb haben.

3. Vorrichtung nach Anspruch 2, **dadurch gekennzeichnet, dass** der Antrieb zumindest einen Elektromotor (7) umfasst.

4. Vorrichtung nach Anspruch 2, **dadurch gekennzeichnet, dass** der Antrieb einen Anschluss an die Zapfwelle eines Zugfahrzeuges oder eine vergleichbare Adaptierung an die Antriebsenergie eines Trägerfahrzeuges aufweist.

5. Vorrichtung nach einem der Ansprüche 2 bis 4, **dadurch gekennzeichnet, dass** der Antrieb wenigstens ein Getriebe aufweist.

6. Vorrichtung nach einem der vorhergehenden Ansprüche, **dadurch gekennzeichnet, dass** der Antrieb eine Welle (6) umfasst, die mit Werkzeugen der Einrichtungen zum Zerkleinern und Formlingformen in Wirkverbindung steht.

7. Vorrichtung nach einem der vorhergehenden Ansprüche, **dadurch gekennzeichnet, dass** die Einrichtung zum Zerkleinern zumindest eine umlaufende Raspeltrommel (4) aufweist.

8. Vorrichtung nach Anspruch 7, **dadurch gekennzeichnet, dass** die Raspeltrommel (4) innen- und/oder außenliegende Raspelzähne aufweist.

9. Vorrichtung nach Anspruch 7 und 8, **dadurch gekennzeichnet, dass** der Boden (10) der Raspeltrommel (4) als Sieb ausgebildet ist.

10. Vorrichtung nach einem der vorhergehenden Ansprüche, **dadurch gekennzeichnet, dass** die Einrichtung zum Formlingformen wechselweise mit Werkzeugen zum Formen von Pellets oder Briketts ausrüstbar ist.

11. Vorrichtung nach einem der vorhergehenden Ansprüche, **dadurch gekennzeichnet, dass** die Einrichtung zum Zerkleinern und die Einrichtung zum Formlingformen in einem gemeinsamen Gehäuse (1) aneinander anschließend angeordnet sind, wobei das Gehäuse (1) in einer schrägen Lage auf einem Chassis (2) aufgenommen ist.

12. Vorrichtung nach einem der Ansprüche 1 bis 10, **dadurch gekennzeichnet, dass** die Einrichtung zum Zerkleinern und die Einrichtung zum Formlingformen in einem gemeinsamen Gehäuse (1) aneinander anschließend angeordnet sind, wobei das Gehäuse (1) in einer vertikalen Lage auf einem Chassis (2) aufgenommen ist.

13. Vorrichtung nach Anspruch 11 oder 12, **dadurch gekennzeichnet, dass** der Elektromotor (7) außerhalb des Gehäuses (1) angeordnet ist und die Welle (6) durch das Gehäuse (1) geführt ist.

14. Vorrichtung nach einem der Ansprüche 11 bis 13, **dadurch gekennzeichnet, dass** das Chassis (2) mit Laufrädern (3) und einer Deichsel ausgerüstet ist.

15. Vorrichtung nach einem der vorhergehenden Ansprüche, **dadurch gekennzeichnet, dass** sie zwischen der Einrichtung zum Zerkleinern und der Einrichtung zum Formlingformen eine Einrichtung zum Konditionieren und Dosieren aufweist.

16. Vorrichtung nach Anspruch 15, **dadurch gekennzeichnet, dass** die Einrichtung zum Dosieren zugleich zum Aussteuern des zerkleinerten Materialstromes vor dem Formlingformen verwendbar ist.

17. Vorrichtung nach einem der vorhergehenden Ansprüche, **dadurch gekennzeichnet, dass** prozessbedingt anfallende Luftströme, Wärme und Feuchtigkeit in sie zurückgeführt werden und zur Konditionierung des Stoffstromes genutzt werden.
